# FASCICULE DE BREVET EUROPEEN

(11) **EP 1 763 698 B1**
(45) Date de publication et mention de la délivrance du brevet: **26.12.2012**
(21) Numéro de dépôt: 05783801.3
(22) Date de dépôt: 28.06.2005
(51) Int. Cl.: G02C 7/02

(54) **PROCEDE DE REALISATION D'UN VERRE OPHTALMIQUE ET COMPOSANT OPTIQUE ADAPTE POUR LA MISE EN OEUVRE DE CE PROCEDE**
VERFAHREN ZUR HERSTELLUNG EINER BRILLENLINSE UND OPTISCHE KOMPONENTE ZUR AUSFÜHRUNG DES VERFAHRENS
METHOD FOR PRODUCING AN OPHTHALMIC LENS AND AN OPTICAL COMPONENT FOR CARRYING OUT SAID METHOD

(30) Priorité: 02.07.2004 FR 0407388
(43) Date de publication de la demande: 21.03.2007
(73) Titulaire: ESSILOR INTERNATIONAL (COMPAGNIE GENERALE D'OPTIQUE), 94220 Charenton-le-Pont (FR)
(72) Inventeur: CANO, Jean-Paul, c/o Essilor International, F-94220 Charenton-le-Pont (FR); COUDRAY, Paul, c/o Kloe SA, F-34000 Montpellier (FR)
(74) Mandataire: Cabinet Plasseraud
(86) Numéro de dépôt international: PCT/FR2005/001635
(87) Numéro de publication internationale: WO 2006/013252

(56) Documents cités:
- EP-A- 1 225 458
- WO-A-2004/015481
- WO-A-2004/034095
- US-A1- 2002 016 629
- US-A1- 2003 081 172
- US-B1- 6 274 288

## Description

La présente invention concerne un procédé de réalisation d'un verre ophtalmique, ainsi qu'un composant optique adapté pour la mise en oeuvre de ce procédé.

On entend par verre ophtalmique tout composant optique de matière minérale et/ou organique, au moins partiellement transparent et destiné à être placé devant l'oeil d'un porteur, quelque soit la fonction optique de ce composant. Ce peut être en particulier une fonction de protection contre l'éblouissement par absorption d'une partie de la lumière, appelée fonction antisolaire, une fonction de renforcement de contraste par coloration ou par filtrage de polarisation, une fonction correctrice d'amétropie, etc. Il peut s'agir notamment d'un verre afocal, unifocal, bifocal, multifocal ou progressif.

Les verres correcteurs d'amétropie sont traditionnellement fabriqués en mettant en forme un matériau transparent d'indice de réfraction plus élevé que l'air. La forme des verres est choisie de façon que la réfraction aux interfaces entre le matériau et l'air provoque une focalisation appropriée de la lumière sur la rétine du porteur. Le verre est généralement découpé pour être adapté à une monture, avec un positionnement approprié par rapport à la pupille de l'oeil corrigé.

Dans certains circuits de distribution, des ébauches de verres correcteurs fabriquées industriellement sont retouchées pour les adapter à l'amétropie d'un oeil à corriger. La retouche consiste par exemple à usiner et polir la face arrière de l'ébauche. Cette méthode concilie l'industrialisation des ébauches, qui permet d'en réduire les coûts, et le besoin de personnaliser la correction. Cependant, la remise en forme de verres selon les besoins des porteurs requiert de l'outillage spécialisé et du savoir-faire. Ceux-ci doivent être disponibles à proximité des lieux de distribution pour satisfaire le souhait courant d'une livraison rapide des verres. Il en résulte de fortes contraintes d'investissement et d'organisation.

Dans le cas des fonctions optiques autres que la correction d'amétropie, les possibilités de personnalisation sont très restreintes. Le porteur se voit généralement proposer un choix parmi un petit nombre de teintes de verres, de degrés d'absorption lumineuse, parfois de polarisations, qui correspondent à des modèles de verres ou d'ébauches disponibles en sortie d'usine. Il est envisageable d'augmenter le nombre de possibilités offertes, mais ce serait au détriment du coût unitaire de production. Les possibilités de faire varier un paramètre d'absorption ou de coloration le long de la surface du verre sont encore plus restreintes, et en tous cas ne sont pas adaptées aux besoins ou desiderata individuels des porteurs.

Des lentilles ophtalmiques comportant une couche d'un matériau actif ayant une propriété optique modifiable par irradiation sont connues de US 2003/0081172.

Un but de la présente invention est de proposer un procédé de réalisation de verres ophtalmiques qui offre une grande souplesse dans l'adaptation aux cas individuels des porteurs.

A cette fin, l'invention propose un procédé de réalisation d'un verre ophtalmique ayant au moins une fonction optique, comprenant les étapes suivantes :
a) produire un composant optique incorporant au moins un matériau actif distribué parallèlement à une surface du composant, le matériau actif ayant une propriété optique modifiable par irradiation ; et
b) irradier sélectivement des portions du matériau actif le long de la surface du composant pour obtenir la fonction optique par modulation de ladite propriété d'une portion à l'autre, lesdites portions ayant des dimensions inférieures à 1 mm. Insérer ici le contenu de la page 2a

Dans le procédé de l'invention, l'étape a) de production du composant optique peut être indépendante ou faiblement dépendante des aspects quantitatifs de la fonction optique du verre. Elle est donc commune à la réalisation de verres de divers types. Les équipements industriels utilisés pour cette étape servent alors à produire un très grand nombre de composants, ce qui permet de réduire le coût unitaire de chaque composant ainsi produit.

L'étape b) permet de programmer la fonction optique du verre. Cette programmation est effectuée par inscription de la fonction optique dans le composant optique, au moyen d'une irradiation de portions du matériau actif. En outre, dans un procédé selon l'invention, le matériau actif est distribué dans des portions qui sont séparées les unes des autres par des parois, et formées dans une partie au moins du composant. La modulation de la propriété optique qui est produite à l'étape b) est alors basée sur une répartition et une forme des portions telles qu'elles existent avant cette étape b).

Une différenciation entre les verres est ainsi obtenue, qui permet de réaliser une gamme de verres diversifiée, couvrant une large gamme de degré d'accomplissement de la fonction optique, et éventuellement des fonctions optiques de types différents. En particulier, la fonction optique d'un verre ophtalmique obtenu par le procédé de l'invention peut comprendre un effet antisolaire et/ou une correction d'amétropie.

Grâce à l'invention, la personnalisation des verres ophtalmiques est retardée dans le déroulement du procédé de réalisation des verres. Il en résulte une rationalisation de la fabrication et une économie de gestion des stocks. En effet, l'étape a) de production des composants optiques peut être effectuée de façon centralisée dans des unités industrielles de relativement grande capacité, et l'étape b) d'irradiation pour programmer la fonction optique de chaque verre peut être effectuée par le distributeur, en fonction des desiderata et/ou des caractéristiques d'amétropie de chaque client. Il est alors suffisant pour le distributeur de ne disposer que d'une réserve de composants optiques d'un modèle unique ou d'un nombre restreint de modèles, ce qui simplifie la gestion de ses stocks.

L'inscription de la fonction optique est obtenue par modulation de la propriété optique entre des portions de matériau actif dont les dimensions parallèlement à la surface du composant optique sont inférieures à 1 mm. Chaque portion constitue donc un pixel auquel est attribuée une valeur de la propriété optique.

Ainsi, selon l'invention, la fonction optique est conférée au verre sous forme pixellisée. Pour cela, la fonction optique est définie par le biais de niveaux variables d'une propriété optique évaluée en des pixels distribués parallèlement à la surface du composant optique. Chaque pixel modifie individuellement la lumière incidente sur ce pixel selon le niveau correspondant de la propriété optique fixé lors de l'irradiation. La fonction optique du verre résulte alors de la combinaison des contributions élémentaires de tous les pixels à la modification de la lumière qui traverse le verre. Grâce à cette pixellisation de la fonction optique, l'inscription de la fonction optique dans le verre peut être effectuée de façon rapide, simple et précise.

La précision élevée selon laquelle la fonction optique peut être définie lors de l'étape b) d'irradiation constitue un autre avantage de l'invention. En particulier, une correction d'amétropie inscrite dans le composant optique selon le procédé de l'invention peut être adaptée exactement à la force de l'amétropie à corriger. On peut se dispenser de retoucher ultérieurement par des moyens mécaniques les surfaces du verre en fonction du degré d'amétropie d'un client particulier.

La propriété optique modifiable du matériau actif peut être de différents types. Pour obtenir un verre antisolaire, la propriété optique modifiable peut comprendre une absorption de lumière par le matériau actif ou une couleur de celui-ci. Ainsi, un verre plus ou moins sombre ou de couleur variable peut être obtenu en utilisant des caractéristiques d'irradiation adaptées pour conférer au matériau actif le niveau d'absorption de lumière désiré ou la couleur recherchée.

La propriété optique modifiable peut aussi comprendre une réfringence du matériau actif. Une onde lumineuse qui traverse l'une des portions du matériau actif est alors déphasée en fonction du trajet optique correspondant à la traversée de cette portion. Le trajet optique est égal au produit de l'épaisseur de la portion de matériau actif par son indice de réfraction. En fixant convenablement l'indice de réfraction dans chaque portion du matériau actif lors de l'étape b) d'irradiation, la phase, et par conséquent la vergence de l'onde lumineuse à la sortie du verre, peuvent être adaptées pour obtenir une correction d'amétropie déterminée.

Selon un mode de réalisation préféré de l'invention, les portions du matériau actif ont des dimensions comprises entre 5 µm (micromètres) et 100 µm parallèlement à la surface du composant verre. Les différents pixels ne peuvent alors pas être discernés individuellement à l'oeil nu, et le verre présente un aspect visuel continu. Il en résulte un excellent confort visuel. En outre, aucune irisation n'est perceptible, de sorte que le verre ne pose pas de problèmes d'esthétique.

Un procédé de réalisation d'un verre ophtalmique selon l'invention peut comprendre en outre l'étape suivante, effectuée après l'étape b) :
c) chauffer le composant optique de façon à rendre le matériau actif insensible à une nouvelle irradiation.

L'état du matériau actif, tel qu'il résulte de l'irradiation de l'étape b), est alors fixé définitivement lors du chauffage. Il ne peut plus être modifié par une nouvelle irradiation survenant lors de l'utilisation du verre.

L'invention concerne aussi un composant optique pour verre ophtalmique incorporant au moins un matériau actif distribué parallèlement à une surface du composant, le matériau actif ayant une propriété optique modifiable par irradiation pour obtenir une modulation de ladite propriété entre des portions du matériau actif ayant des dimensions inférieures à 1 mm. La propriété optique modifiable peut comprendre une absorption de lumière et/ou une réfringence du matériau actif.

D'autres particularités et avantages de la présente invention apparaîtront dans la description ci-après de plusieurs exemples de mises en oeuvre non limitatifs, en référence aux dessins annexés, dans lesquels :
- la figure 1 représente un composant optique adapté pour une mise en oeuvre l'invention ;
- la figure 2a est une coupe d'un composant optique selon la figure 1, tel que connu avant la présente invention ;
- la figure 2b est une coupe d'un composant optique selon la figure 1, tel que proposé par la présente invention ;
- la figure 3 illustre l'étape d'irradiation d'un procédé selon l'invention ;
- la figure 4a illustre, un exemple, de distribution du portions de matériau actif pour un composant optique selon la figure 2a, connu avant l'invention ;
- la figure 4b illustre un exemple de distribution de portions de matériau actif pour un composant optique selon la figure 2b, tel que proposé par l'invention ;
- les figures 5a et 5b sont deux diagrammes de variation d'un paramètre optique pour des verres ophtalmiques réalisés selon l'invention ; et
- la figure 6 représente un composant optique adapté pour une mise en oeuvre particulière de l'invention.

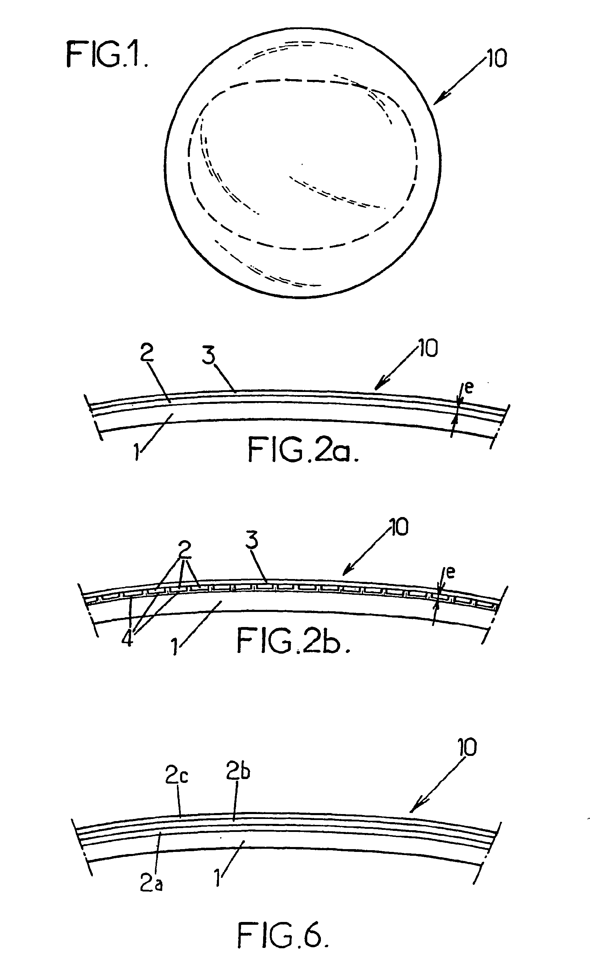

Le composant optique 10 représenté sur la figure 1 est une ébauche pour verre de lunettes. Cette ébauche peut avoir un diamètre de 6 cm, par exemple. De façon connue, le verre prêt à être assemblé avec une monture est obtenu par détourage de l'ébauche 10 selon un contour qui correspond à la monture. Ce contour est représenté en pointillés sur la figure 1.

Les figures 2a et 2b illustrent deux configurations initiales du composant optique, qui correspondent à deux façons différentes de définir les pixels d'inscription de la fonction optique dans le verre. Dans le cas d'une configuration selon la figure 2a, qui ne fait pas partie de l'invention, les pixels ne sont pas définis dans le composant optique avant l'étage d'irradiation. A l'inverse, un composant optique ayant une configuration selon la figure 2b. selon l'invention possède initialement des pixels qui sont individuellement définis lors de la fabrication du composant optique, par leurs dimensions, leur forme et leur structure respectives.

Selon la première configuration du composant optique qui ne fait pas partie de l'invention (figure 2a), le matériau actif est distribué en une couche sensiblement continue dans une partie au moins du composant Ainsi, l'ébauche de verre 10 est constituée d'un substrat 1 de matière transparente minérale ou organique, recouvert sur l'une de ses faces d'une couche continue de matériau actif 2. La couche de matériau actif 2 peut présenter une épaisseur e uniforme sur toute la face du substrat 1. Eventuellement, la couche 2 peut elle-même être recouverte d'au moins un revêtement 3. Un tel revêtement 3 peut être notamment un revêtement antireflet, un revêtement dur pour apporter au verre une résistance améliorée contre des rayures, ou encore un revêtement hydrophobe. La couche de matériau actif 2 et le revêtement 3 peuvent être appliqués sur le substrat 1 selon l'une de méthodes connues de l'Homme du métier.

Selon la seconde configuration (figure 2b) qui est conforme à l'invention, le matériau actif est distribué dans des portions 4 séparées les unes des autres et formées dans une partie au moins du composant. A titre d'exemple, les portions 4 sont disposées sur l'une des faces du substrat 1 de matière transparente. Elles sont adjacentes les unes aux autres et forment un maillage de façon à recouvrir l'ensemble de la face supérieure du substrat 1. Les portions 4 peuvent être formées directement dans le substrat 1 ou dans une couche d'un matériau supplémentaire rapportée sur le substrat 1. Chaque portion de matériau actif 2 possède une épaisseur e. Un revêtement 3 peut encore être disposé au dessus des portions 4.

De préférence, dans les différentes configurations possibles du composant optique, l'épaisseur e du matériau actif 2 est supérieure à 10 µm au sein du composant. La fonction optique qui résulte de la modulation de la propriété optique du matériau actif 2 peut alors présenter une amplitude élevée. A titre d'exemple, dans le cas de la modulation du coefficient d'absorption du matériau actif 2, des verres très sombres peuvent être obtenus. En effet, l'épaisseur du matériau actif absorbant est alors suffisante pour obtenir une réduction importante de l'intensité de la lumière, dans une proportion pouvant atteindre 90% de la lumière incidente par exemple. Le procédé de l'invention permet donc de réaliser des verres antisolaires procurant une protection efficace.

De même, lorsque la propriété optique modulée est la réfringence du matériau actif, des corrections d'amétropies fortes peuvent être obtenues. En effet, les variations de trajet optique résultant de la modulation de l'indice de réfraction étant proportionnelles à l'épaisseur du matériau actif, une épaisseur de celui-ci supérieure à 10 µm permet d'obtenir des variations importantes du trajet optique entre différents points de la surface du verre.

L'irradiation du matériau actif 2 pour inscrire la fonction optique dans l'ébauche de verre 10 peut être effectuée de plusieurs façons. En particulier, elle peut être effectuée en exposant le matériau actif 2 à un faisceau approprié au travers d'un masque. Un tel masque présente des zones essentiellement transparentes au faisceau, des zones partiellement transparentes ou/et des zones opaques. En choisissant la quantité d'énergie du faisceau reçue par chaque portion du matériau actif 2, la propriété optique est fixée dans cette portion à un niveau déterminé. La quantité d'énergie du faisceau reçue par chaque portion peut être variée en changeant la puissance du faisceau et/ou la durée d'exposition.

Le faisceau utilisé pour irradier les portions du matériau actif peut être de différentes natures : ce peut être un faisceau de rayonnement électromagnétique, notamment de rayonnement ultraviolet, ou un faisceau d'électrons. Des sources d'irradiation connues peuvent être utilisées, qui sont choisies en fonction de la nature du faisceau. En outre, lors de l'irradiation, l'ensemble des portions du matériau actif 2 peut être exposé simultanément, ou bien certaines portions du matériau actif 2 peuvent être irradiées successivement.

Avantageusement, l'irradiation est contrôlée de sorte que la propriété optique est modulée d'une façon discrète selon un ensemble prédéfini de valeurs quantifiant cette propriété. Un contrôle numérique de l'irradiation peut alors être utilisé, qui procure une grande facilité de programmation. Pour que la fonction optique du verre puisse être définie avec une grande précision, l'ensemble prédéfini de valeurs comprend de préférence au moins dix valeurs distinctes.

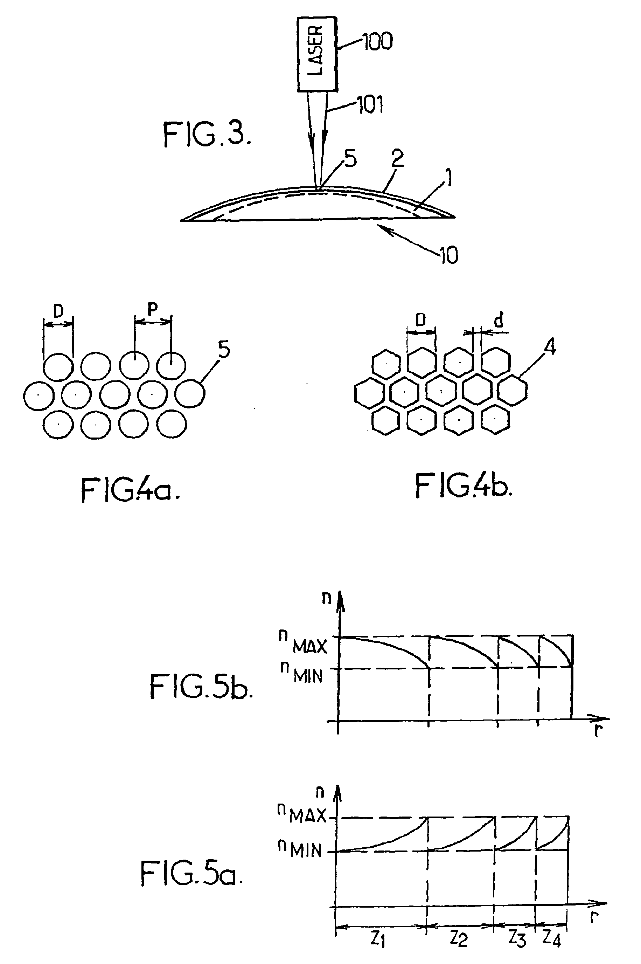

La figure 3 illustre un mode de mise en oeuvre préféré de l'invention, qui ne nécessite pas d'utiliser un masque lors de l'irradiation. L'ébauche de verre 10 peut être de l'une des première ou seconde configurations décrites plus haut. L'irradiation est effectuée au moyen d'un laser 100 produisant un faisceau de lumière 101, par exemple de lumière ultraviolette. L'ébauche 10 est placée devant le faisceau 101. La distance entre le laser 100 et l'ébauche 10 est ajustée de sorte-que le matériau actif-2 soit situé au niveau d'un point de convergence du faisceau 101. Le faisceau 101 est déplacé parallèlement à la surface de l'ébauche 10 de façon à irradier des portions différentes du matériau actif 2 lors d'expositions successives. Une inscription de la fonction optique est ainsi obtenue, avec une résolution élevée parallèlement à la surface de l'ébauche. Lorsque l'ébauche 10 comprend un revêtement 3, celui-ci doit être transparent au faisceau 101.

Les mécanismes d'entraînement et de positionnement du faisceau laser lors de l'écriture de la fonction optique peuvent être du genre de ceux classiquement employés dans les graveurs de disques compacts optiques. A partir d'un fichier informatique décrivant la quantification de la fonction optique à fournir, ces mécanismes et l'alimentation du laser sont commandés pour réaliser la modulation souhaitée de la propriété optique du matériau actif entre des pixels différents.

Lorsque le matériau actif 2 est initialement réparti en une couche continue dans l'ébauche 10, comme représenté à la figure 2a, la forme des portions du matériau actif 2 qui correspondent à des pixels différents est déterminée lors de l'irradiation. Si l'irradiation est effectuée au travers d'un masque, les pixels reproduisent le motif du masque. Si l'irradiation est effectuée au moyen d'un faisceau focalisé, les pixels correspondent à la section du faisceau dans la couche de matériau actif lors des expositions successives.

La figure 4a illustre une distribution possible des pixels pour une ébauche 10 ayant la configuration illustrée à la figure 2a et ne faisant pas partie de l'invention. Cette distribution correspond à un maillage par des pixels sensiblement circulaires 5. p est la distance entre deux pixels voisins, et correspond à la distance élémentaire de translation du faisceau 101 lorsque l'irradiation est effectuée conformément à la figure 3. D est le diamètre de chaque pixel 5, et correspond sensiblement au diamètre du faisceau laser 101 au niveau du matériau actif 2.

Lorsque le matériau actif 2 est initialement réparti dans des portions séparées de l'ébauche 10, selon l'invention et comme représenté à la figure 2b, les conditions d'irradiation sont ajustées de sorte que chaque portion 4 de matériau actif 2 est exposée au rayonnement dans de mêmes conditions. La modulation de la propriété optique est alors basée sur la répartition et la forme des portions telles qu'elles existent avant l'irradiation. Selon la figure 4b, les portions 4 peuvent avoir chacune une forme hexagonale de largeur D, et deux portions voisines sont séparées par une paroi d'épaisseur d. Le pas p du maillage est alors égal à la somme de D et de d.

De façon générale, le pas p est préférablement compris entre 5 µm et 100 µm. Le verre présente alors un aspect visuel uniforme dépourvu d'irisations. A titre d'exemple, D peut être égal à 20 µm et, pour une réalisation à portions de matériau actif initialement séparées, d peut être égal à 0,2 µm. La surface de l'ébauche 10 comprend alors un très grand nombre de portions du matériau actif 2 formant pixels, dans chacune desquelles la fonction optique est ajustée. A titre d'exemple, plus de un million de pixels peuvent être mis en oeuvre.

Le maillage de la surface du composant optique par les pixels peut être quelconque. En particulier, les portions irradiées du matériau actif peuvent être distribuées dans le composant selon un maillage hexagonal. Un tel maillage permet un taux de recouvrement élevé de la surface du composant optique pour de nombreuses formes des portions de matériau actif. En particulier, un maillage hexagonal est adapté lorsque les pixels sont circulaires (figure 4a) ou hexagonaux (figure 4b).

Dans certains cas, il peut être avantageux de distribuer les pixels selon un maillage irrégulier. Des effets de diffraction parasites peuvent ainsi être supprimés. Dans certain cas également et selon les besoins de l'invention les pixels peuvent être carrés ou rectangulaires. Les différentes formes de pixels peuvent aussi être combinées.

Le matériau actif 2 peut comprendre un photoinitiateur et/ou un photopolymère. Le photoinitiateur et/ou le photopolymère est sensible à l'irradiation lorsque celle-ci est effectuée dans des conditions appropriées.

Les documents EP 1 225 458 et US 6 309 803 décrivent un matériau actif sensible à une lumière ultraviolette de longueur d'onde 365 nm (nanomètres). Un tel matériau actif peut polymériser selon deux phases différentes, qui sont sélectionnées par les conditions de polymérisation appliquées au composant optique. La première phase correspond à un réseau de polymérisation organique. Elle est formée lorsque le matériau actif est irradié. La seconde phase correspond à un réseau de polymérisation minéral et est formée lorsque le matériau actif est chauffé. L'indice de réfraction de la première phase est inférieur à celui de la seconde phase.

Un tel matériau actif 2 peut être déposé sur le substrat 1 par trempage du substrat 1 dans une solution de précurseurs. Un tel procédé de dépôt est couramment désigné par « dip-coating », en anglais. La solution comprend deux précurseurs susceptibles de former ensemble un réseau de polymérisation organique ou un réseau de polymérisation minéral. Les deux précurseurs sont le 3-(triméthoxysilyl)propyl méthacrylate et le produit de la réaction entre le n-propoxyde de zirconium et l'acide méthacrylique. De l'irgacure 1800, disponible commercialement auprès du fournisseur CIBA par exemple, est en outre ajouté à la solution de précurseurs. Après le trempage du substrat 1 dans la solution de précurseurs, le substrat 1 est chauffé à une température supérieure ou égale à 60°C pendant environ 30 minutes. Une couche séchée de matériau actif 2 est alors obtenue sur le substrat 1.

Lorsqu'une portion du matériau actif 2 ainsi obtenu est irradiée avec une lumière ultraviolette de longueur d'onde 365 nm, le réseau organique de polymérisation se forme, avec une densité qui dépend de la durée et de l'intensité de l'irradiation. Le substrat 1 est ensuite chauffé à une température supérieure ou égale à 100°C pendant 20 à 45 minutes. Le réseau de polymérisation minéral se forme alors. Dans les portions de matériau actif 2 qui n'ont pas été préalablement irradiées, il constitue une phase pure d'indice de réfraction élevé. Dans les portions de matériau actif 2 qui ont été préalablement irradiées, le réseau de polymérisation minéral est formé à partir des quantités de précurseurs qui n'ont pas été consommées par la polymérisation organique. Des valeurs d'indice de réfraction intermédiaires entre les valeurs extrêmes correspondant au réseau minéral pur et au réseau organique pur sont ainsi obtenues dans les portions irradiées.

A l'issue du chauffage de polymérisation selon le réseau minéral, les deux précurseurs sont intégralement consommés. Le matériau actif 2 est alors insensible à une nouvelle irradiation par de la lumière ultraviolette à la longueur d'onde de 365 nm.

Selon un mode de mise en oeuvre particulier de l'invention, l'irradiation est contrôlée de sorte que la modulation de la propriété optique présente des sauts entre certaines portions adjacentes du matériau actif. La figure 5a est un exemple de telles variations pour un matériau actif 2 à réfringence modifiable. La distribution de l'indice de réfraction ne dépend que de la distance r entre un point de la couche de matériau actif 2 et le centre de l'ébauche 10. La distance r est portée en abscisse et la valeur de l'indice de réfraction n est portée en ordonnée. L'ébauche 10 est divisée en couronnes concentriques Z₁-Z₄. L'indice de réfraction n varie progressivement (continûment ou par sauts élémentaires correspondant à la résolution d'indice du système d'écriture) à l'intérieur de chacune des couronnes Z₁-Z₄ entre une valeur minimale, notée n_{MiN} et une valeur maximale, notée n_{MAX}. A la frontière entre deux couronnes successives, l'indice de réfraction saute de la valeur n_{MAX} à la valeur n_{MIN}. Le composant optique ainsi obtenu possède une fonction de lentille de Fresnel divergente, tout en ayant une épaisseur uniforme. Un verre correcteur de myopie peut ainsi être obtenu, qui possède une force optique supérieure à celles de verres réalisés selon l'invention avec une variation continue de l'indice de réfraction sur l'ensemble de la surface de l'ébauche.

La figure 5b correspond à la figure 5a pour un verre correcteur d'hypermétropie. La fonction optique obtenue est celle d'une lentille de Fresnel convergente.

Dans certaines mises en oeuvre particulières de l'invention, le composant optique incorpore plusieurs matériaux actifs choisis de sorte qu'une propriété optique respective de chaque matériau actif peut être sélectivement modifiée par irradiation du composant optique. Chaque matériau actif est distribué parallèlement à la surface du composant. Une fonction optique distincte peut alors être inscrite dans le composant optique pour chaque matériau actif, en irradiant le composant dans des conditions appropriées correspondant à chacun des matériaux actifs. La fonction optique globale du composant optique ainsi réalisé correspond à la superposition des fonctions optiques inscrites au moyen de chacun des matériaux actifs. Lorsque les fonctions optiques inscrites sont de nature à se cumuler, la fonction optique globale peut posséder une amplitude particulièrement importante. A titre d'exemple, si l'inscription dans chaque matériau actif correspond à une fonction de correction de myopie, un verre adapté à un degré de myopie particulièrement élevé peut être obtenu.

De façon avantageuse, les matériaux actifs sont répartis dans des couches respectives superposées au sein du composant optique. Le composant optique peut alors être réalisé simplement. En particulier, les matériaux actifs peuvent être successivement déposés ou rapportés sur un substrat en utilisant pour chacun d'eux un procédé de dépôt adapté. La figure 6 représente une ébauche de verre 10 qui comprend un substrat 1 sur une face duquel sont superposées trois couches différentes de matériaux actifs, référencées 2a-2c.

Les conditions d'irradiation pour modifier sélectivement la propriété optique de l'un des matériaux actifs peuvent être déterminées par au moins un photoinitiateur incorporé dans chaque matériau actif. Les différents matériaux actifs contiennent alors avantageusement des photoinitiateurs respectifs qui sont sensibles à des rayonnements de longueurs d'onde distinctes.

Il est entendu dans le cadre de l'invention que le substrat 1 peut posséder une fonction optique par lui-même. Cette fonction optique du substrat 1 se superpose alors, ou se cumule, à la fonction optique apportée par la modulation de la propriété optique du matériau actif 2. Par exemple, le substrat 1 peut être en une matière absorbante qui confère au verre final une fonction antisolaire, et l'irradiation du matériau actif peut conférer au verre une fonction correctrice d'amétropie. Un verre à la fois antisolaire et correcteur est ainsi obtenu. Le substrat 1 peut aussi posséder par lui-même une fonction correctrice, qui peut résulter notamment d'une différence d'épaisseur entre le centre et la périphérie du substrat 1. Une fonction optique supplémentaire de correction d'amétropie apportée par la modulation de la réfringence du matériau actif 2 se cumule alors à la fonction de correction du substrat 1.

Enfin, bien que l'invention a été décrite en détail pour un verre de lunettes, il est aussi entendu qu'elle peut être appliquée identiquement à d'autre éléments ophtalmiques tels que, par exemple, une visière de casque ou un verre de masque. Ce peut être, par exemple, un casque de motocycliste ou de pilote d'avion, ou encore un masque de plongée ou d'alpinisme.

## Revendications

1. Procédé de réalisation d'un verre ophtalmique ayant au moins une fonction optique, comprenant les étapes successives suivantes :
a) produire un composant optique (10) incorporant au moins un matériau actif (2) distribué parallèlement à une surface du composant dans des portions (4) séparées les unes des autres par des parois, et formées dans une partie au moins dudit composant (10), le matériau actif ayant une propriété optique modifiable par irradiation ; et
b) irradier sélectivement des portions du matériau actif (4 ; 5) le long de la surface du composant (10) pour obtenir la fonction optique sous forme pixellisée par modulation de ladite propriété d'une portion à l'autre, lesdites portions ayant des dimensions inférieures à 1 mm,
et dans lequel la modulation de la propriété optique produite à l'étape b) est basée sur une répartition et une forme des portions existant avant ladite étape b), chaque portion constituant un pixel auquel est attribuée une valeur de la propriété optique.

2. Procédé selon la revendication 1, dans lequel les portions du matériau actif (4 ; 5) ont des dimensions comprises entre 5 et 100 µm parallèlement à la surface du composant.

3. Procédé selon la revendication 1 ou 2, dans lequel les portions du matériau actif (4 ; 5) sont distribuées dans le composant (10) selon un maillage hexagonal.

4. Procédé selon l'une quelconque des revendications précédentes, dans lequel le matériau actif (2) présente une épaisseur supérieure à 10 µm au sein du composant optique (10).

5. Procédé selon l'une quelconque des revendications précédentes, dans lequel certaines portions du matériau actif (4 ; 5) sont irradiées successivement.

6. Procédé selon l'une quelconque des revendications précédentes, dans lequel l'irradiation est effectuée au moyen d'un laser (100).

7. Procédé selon l'une quelconque des revendications précédentes, dans lequel le matériau actif (2) contient un photoinitiateur.

8. Procédé selon l'une quelconque des revendications précédentes, dans lequel le matériau actif (2) contient un photopolymère.

9. Procédé selon l'une quelconque des revendications précédentes, dans lequel la propriété optique modifiable comprend une absorption de lumière par le matériau actif (2).

10. Procédé selon l'une quelconque des revendications précédentes, dans lequel la propriété optique modifiable comprend une réfringence du matériau actif (2).

11. Procédé selon l'une quelconque des revendications précédentes, dans lequel l'irradiation est contrôlée de sorte que la propriété optique est modulée d'une façon discrète selon un ensemble prédéfini de valeurs quantifiant ladite propriété.

12. Procédé selon la revendication 11, dans lequel l'ensemble prédéfini de valeurs comprend au moins dix valeurs distinctes.

13. Procédé selon l'une quelconque des revendications précédentes, dans lequel l'irradiation est contrôlée de sorte que la modulation de la propriété optique présente des sauts entre certaines portions adjacentes du matériau actif (4 ; 5).

14. Procédé selon la revendication 10, dans lequel la fonction optique comprend une correction d'amétropie.

15. Procédé selon la revendication 14, dans lequel l'irradiation est contrôlée pour que la modulation de la réfringence du matériau actif (2) présente des sauts entre certaines portions adjacentes du matériau actif (4 ; 5) de façon à conférer au verre une propriété de lentille de Fresnel.

16. Procédé selon l'une quelconque des revendications précédentes, comprenant en outre l'étape suivante :
c) chauffer le composant optique (10) après irradiation, de façon à rendre le matériau actif (2) insensible à une nouvelle irradiation.

17. Procédé selon l'une quelconque des revendications précédentes, dans lequel le composant optique (10) incorpore plusieurs matériaux actifs (2a, 2b, 2c) choisis de sorte qu'une propriété optique respective de chaque matériau actif peut être sélectivement modifiée par irradiation du composant optique, chaque matériau actif étant distribué parallèlement à la surface du composant (10).

18. Procédé selon la revendication 17, dans lequel les matériaux actifs (2a, 2b, 2c) sont répartis dans des couches respectives superposées au sein du composant (10).

19. Procédé selon la revendication 17 ou 18, dans lequel les matériaux actifs (2a, 2b, 2c) contiennent des photoinitiateurs respectifs sensibles à des rayonnements de longueur d'onde distinctes.

20. Composant optique (10) pour verre ophtalmique, incorporant au moins un matériau actif (2) distribué parallèlement à une surface du composant dans des portions (4) séparées les unes des autres par des parois, et formées dans une partie au moins dudit composant, le matériau actif ayant une propriété optique modifiable par irradiation pour obtenir une modulation de ladite propriété entre des portions du matériau actif ayant des dimensions inférieures à 1 mm, chaque portion constituant un pixel auquel une valeur de la propriété optique est destinée à être attribuée.

21. Composant selon la revendication 20, dans lequel le matériau actif (2) contient un photoinitiateur.

22. Composant selon la revendication 20 ou 21, dans lequel le matériau actif (2) contient un photopolymère.

23. Composant selon l'une quelconque des revendications 20 à 22, dans lequel le matériau actif (2) présente une épaisseur supérieure à 10 µm au sein du composant optique (10).

24. Composant selon l'une quelconque des revendications 20 à 23, dans lequel la propriété optique modifiable comprend une absorption de lumière par le matériau actif (10).

25. Composant selon l'une quelconque des revendications 20 à 24, dans lequel la propriété optique modifiable comprend une réfringence du matériau actif (10).

26. Composant selon l'une quelconque des revendications 20 à 25, incorporant plusieurs matériaux actifs (2a, 2b, 2c), chaque matériau actif ayant une propriété optique modifiable sélectivement par irradiation et étant distribué parallèlement à la surface du composant (10).

27. Composant selon la revendication 26, dans lequel les matériaux actifs (2a, 2b, 2c) sont répartis dans des couches respectives superposées au sein du composant (10).

28. Composant selon la revendication 26 ou 27, dans lequel les matériaux actifs (2a, 2b, 2c) contiennent des photoinitiateurs respectifs sensibles à des rayonnements de longueur d'onde distinctes.

## Claims

1. A method for producing an ophthalmic lens having at least one optical function, comprising the following successive steps:
a) producing an optical component (10) incorporating at least one active material (2) distributed in parallel with a surface of the component, in portions (4) separated from each other by walls, and formed in at least part of said component (10), the active material having an irradiation-modifiable optical property; and
b) selectively irradiating portions of the active material (4; 5) along the surface of the component (10) to obtain the optical function in a pixallated form by modulating said property from one portion to another, said portions having dimensions smaller than 1 mm,
and wherein the modulation of the optical property performed in step b) is based on a distribution and a shape of the portions as existing before said step b), each portion forming one pixel to which is assigned a value of the optical property.

2. The method as claimed in claim 1, wherein the portions of the active material (4; 5) have dimensions of between 5 and 100 µm parallel to the component surface.

3. The method as claimed in claim 1 or 2, wherein the portions of the active material (4; 5) are distributed in the component (10) with a hexagonal mesh.

4. The method as claimed in any one of the preceding claims, wherein the active material (2) has a thickness higher than 10 µm within the optical component (10).

5. The method as claimed in any one of the preceding claims, wherein certain portions of the active material (4; 5) are successively irradiated.

6. The method as claimed in any one of the preceding claims, wherein the irradiation is carried out using a laser (100).

7. The method as claimed in any one of the preceding claims, wherein the active material (2) contains a photoinitiator.

8. The method as claimed in any one of the preceding claims, wherein the active material (2) contains a photopolymer.

9. The method as claimed in any one of the preceding claims, wherein the modifiable optical property comprises an absorption of light by the active material (2).

10. The method as claimed in any one of the preceding claims, wherein the modifiable optical property comprises a refringence of the active material (2).

11. The method as claimed in any one of the preceding claims, wherein the irradiation is controlled so that the optical property is modulated discretely according to a predefined set of values quantifying said property.

12. The method according to claim 11, wherein the predefined set of values comprises at least ten distinct values.

13. The method as claimed in any one of the preceding claims, wherein the irradiation is controlled so that the modulation of the optical property exhibits jumps between certain adjacent portions of the active material (4; 5).

14. The method as claimed in claim 10, wherein the optical function comprises an ametropia correction.

15. The method as claimed in claim 14, wherein the irradiation is controlled so that the modulation of the refringence of the active material (2) exhibits jumps between certain adjacent portions of the active material (4; 5) in order to impart a Fresnel lens property to the lens.

16. The method as claimed in any one of the preceding claims, further comprising the following step:
c) heating the optical component (10) after irradiation, to make the active material (2) insensitive to another irradiation.

17. The method as claimed in any one of the preceding claims, wherein the optical component (10) incorporates a plurality of active materials (2a, 2b, 2c) selected so that a respective optical property of each active material can be modified selectively by irradiating the optical component, each active material being distributed parallel to the surface of the component (10).

18. The method as claimed in claim 17, in which the active materials (2a, 2b, 2c) are distributed in respective superimposed layers within the component (10).

19. The method as claimed in claim 17 or 18, in which the active materials (2a, 2b, 2c) contain respective photoinitiators sensitive to radiations of distinct wavelengths.

20. An optical component (10) for ophthalmic lens, incorporating at least one active material (2) distributed parallel to a surface of the component, in portions (4) separated from each other by walls, and formed in at least part of said component, the active material having an irradiation-modifiable optical property for obtaining a modulation of said property between portions of the active material having dimensions smaller than 1 mm, each portion forming one pixel to which a value of the optical property is to be assigned.

21. The component as claimed in claim 20, wherein the active material (2) contains a photoinitiator.

22. The component as claimed in claim 20 or 21, wherein the active material (2) contains a photopolymer.

23. The component as claimed in any one of claims 20 to 22, wherein the active material (2) has a thickness higher than 10 µm within the optical component (10).

24. The component as claimed in any one of claims 20 to 23, wherein the modifiable optical property comprises an absorption of light by the active material (10).

25. The component as claimed in any one of claims 20 to 24, in which the modifiable optical property comprises a refringence of the active material (10).

26. The component as claimed in any one of claims 20 to 25, incorporating a plurality of active materials (2a, 2b, 2c), each active material having an optical property selectively modifiable by irradiation and being distributed parallel to the surface of the component (10).

27. The component as claimed in claim 26, wherein the active materials (2a, 2b, 2c) are distributed in respective layers superimposed within the component (10).

28. The component as claimed in claim 26 or 27, in which the active materials (2a, 2b, 2c) contain respective photoinitiators sensitive to radiations of distinct wavelengths.

## Patentansprüche

1. Verfahren zur Herstellung von einem ophthalmischen Glas mit wenigstens einer optischen Funktion, umfassend die folgenden aufeinander folgenden Schritte:
a) Herstellen eines optischen Bauteils (10), welches wenigstens ein aktives Material (2) umfasst, welches parallel zu einer Oberfläche des Bauteils in Abschnitten (4) verteilt ist, die voneinander durch Wände getrennt sind, und die wenigstens in einem Teil von dem Bauteil (10) ausgebildet sind, wobei das aktive Material eine durch Bestrahlung veränderbare optische Eigenschaft aufweist, und
b) selektives Bestrahlen der Abschnitte des aktiven Materials (4; 5) entlang der Oberfläche des Bauteils (10), um die optische Funktion in pixelierter Form durch Modulation von der Eigenschaft von einem Abschnitt zum anderen zu erhalten, wobei die Abschnitte Abmessungen von kleiner als 1 mm aufweisen,
und wobei die im Schritt b) erzeugte Modulation der optischen Eigenschaft auf einer Verteilung und einer Form von vor dem Schritt b) existierenden Abschnitten basiert, wobei jeder Abschnitt ein Pixel bildet, dem ein Wert der optischen Eigenschaft zugeordnet ist.

2. Verfahren nach Anspruch 1, wobei die Abschnitte des aktiven Materials (4; 5) Abmessungen zwischen 5 und 100 µm parallel zu der Oberfläche des Bauteils aufweisen.

3. Verfahren nach Anspruch 1 oder 2, wobei die Abschnitte des aktiven Materials (4; 5) in dem Bauteil (10) gemäß einem hexagonalen Netz verteilt sind.

4. Verfahren nach einem der vorhergehenden Ansprüche, wobei das aktive Material (2) eine Dicke von größer als 10 µm in dem optischen Bauteil (10) aufweist.

5. Verfahren nach einem der vorhergehenden Ansprüche, wobei bestimmte Abschnitte des aktiven Materials (4; 5) nacheinander bestrahlt werden.

6. Verfahren nach einem der vorhergehenden Ansprüche, wobei die Bestrahlung vermittels eines Lasers (100) durchgeführt wird.

7. Verfahren nach einem der vorhergehenden Ansprüche, wobei das aktive Material (2) einen Photoinitiator enthält.

8. Verfahren nach einem der vorhergehenden Ansprüche, wobei das aktive Material (2) ein Photopolymer enthält.

9. Verfahren nach einem der vorhergehenden Ansprüche, wobei die veränderbare optische Eigenschaft eine Lichtabsorption durch das aktive Material (2) umfasst.

10. Verfahren nach einem der vorhergehenden Ansprüche, wobei die veränderbare optische Eigenschaft ein Brechungsvermögen des aktiven Materials (2) umfasst.

11. Verfahren nach einem der vorhergehenden Ansprüche, wobei die Bestrahlung derart gesteuert/geregelt wird, dass die optische Eigenschaft in einer diskreten Weise gemäß einer vordefinierten Menge von Werten moduliert wird, welche die Eigenschaft quantifizieren.

12. Verfahren nach Anspruch 11, wobei die vordefinierte Menge von Werten wenigstens zehn verschiedene Werte umfasst.

13. Verfahren nach einem der vorhergehenden Ansprüche, wobei die Bestrahlung derart gesteuert/geregelt wird, dass die Modulation der optischen Eigenschaft zwischen bestimmten benachbarten Abschnitten des aktiven Materials (4; 5) Sprünge aufweist.

14. Verfahren nach Anspruch 10, wobei die optische Funktion eine Fehlsichtigkeitskorrektur umfasst.

15. Verfahren nach Anspruch 14, wobei die Bestrahlung gesteuert/geregelt wird, damit die Modulation des Brechungsvermögens des aktiven Materials (2) Sprünge zwischen bestimmten benachbarten Abschnitten des aktiven Materials (4; 5) aufweist, so dass dem Glas eine Fresnel-Linsen-Eigenschaft verliehen wird.

16. Verfahren nach einem der vorhergehenden Ansprüche, weiter umfassend den folgenden Schritt:
c) Erwärmen des optischen Bauteils (10) nach der Bestrahlung, um das aktive Material (2) für eine erneute Bestrahlung unempfindlich zu machen.

17. Verfahren nach einem der vorhergehenden Ansprüche, wobei das optische Bauteil (10) mehrere aktive Materialien (2a, 2b, 2c) umfasst, die so ausgewählt sind, dass jeweils eine optische Eigenschaft von jedem aktiven Material selektiv durch Bestrahlung des optischen Bauteils verändert werden kann, wobei jedes aktive Material parallel zu der Oberfläche des Bauteils (10) verteilt ist.

18. Verfahren nach Anspruch 17, wobei die aktiven Materialien (2a, 2b, 2c) in jeweiligen übereinander angeordneten Schichten in dem Bauteil (10) verteilt sind.

19. Verfahren nach Anspruch 17 oder 18, wobei die aktiven Materialien (2a, 2b, 2c) jeweilige Photoinitiatoren umfassen, die empfindlich für Strahlen mit verschiedenen Wellenlängen sind.

20. Optisches Bauteil (10) für ein ophthalmisches Glas, umfassend wenigstens ein aktives Material (2), das parallel zu einer Oberfläche des Bauteils in Abschnitten (4) verteilt ist, die voneinander durch Wände getrennt sind, und die wenigstens in einem Teil von dem Bauteil ausgebildet sind, wobei das aktive Material eine durch Bestrahlung veränderbare optische Eigenschaft hat, um eine Modulation der Eigenschaft zwischen Abschnitten des aktiven Materials zu erhalten, die Abmessungen von kleiner als 1 mm aufweisen, wobei jeder Abschnitt ein Pixel bildet, dem ein Wert der optischen Eigenschaft zuzuordnen ist.

21. Bauteil nach Anspruch 20, wobei das aktive Material einen Photoinitiator enthält.

22. Bauteil nach Anspruch 20 oder 21, wobei das aktive Material (2) ein Photopolymer enthält.

23. Bauteil nach einem der Ansprüche 20 bis 22, wobei das aktive Material (2) eine Dicke von größer als 10 µm in dem optischen Bauteil aufweist.

24. Bauteil nach einem der Ansprüche 20 bis 23, wobei die veränderbare optische Eigenschaft eine Lichtabsorption durch das aktive Material (10) umfasst.

25. Bauteil nach einem der Ansprüche 20 bis 24, wobei die veränderbare optische Eigenschaft ein Brechungsvermögen des aktiven Materials (10) umfasst.

26. Bauteil nach einem der Ansprüche 20 bis 25, umfassend mehrere aktive Materialien (2a, 2b, 2c), wobei jedes aktive Material eine optische Eigenschaft aufweist, die selektiv durch Bestrahlung veränderbar ist, und es parallel zu der Oberfläche des Bauteils (10) verteilt ist.

27. Bauteil nach Anspruch 26, wobei die aktiven Materialien (2a, 2b, 2c) in jeweiligen übereinander angeordneten Schichten in dem Bauteil (10) verteilt sind.

28. Bauteil nach Anspruch 26 oder 27, wobei die aktiven Materialien (2a, 2b, 2c) jeweilige Photoinitiatoren umfassen, die empfindlich für Strahlen mit verschiedenen Wellenlängen sind.
